# EUROPÄISCHE PATENTSCHRIFT

(11) **EP 1 153 469 B1**
(45) Veröffentlichungstag und Bekanntmachung des Hinweises auf die Patenterteilung: **02.05.2003**
(21) Anmeldenummer: 00907542.5
(22) Anmeldetag: 10.02.2000
(51) Int. Cl.: H02K 9/06, H02K 9/08, H02K 1/27, H02K 3/18

(54) **ELEKTRISCHE MASCHINE**
ELECTRIC MACHINE
MACHINE ELECTRIQUE

(30) Priorität: 12.02.1999 DE 29902510 U; 23.08.1999 DE 29914468 U
(43) Veröffentlichungstag der Anmeldung: 14.11.2001
(73) Patentinhaber: Schiller, Helmut, 64625 Bensheim (DE)
(72) Erfinder: Schiller, Helmut, 64625 Bensheim (DE)
(74) Vertreter: Helber, Friedrich G., Dipl.-Ing.
(86) Internationale Anmeldenummer: EP0001093
(87) Internationale Veröffentlichungsnummer: WO00048294

(56) Entgegenhaltungen:
- WO-A-96/38902
- DE-A- 4 214 483
- DE-A- 19 701 797
- GB-A- 2 275 371
- PATENT ABSTRACTS OF JAPAN vol. 012, no. 196 (E-618), 7. Juni 1988 (1988-06-07) & JP 62 296737 A (NISSAN MOTOR CO LTD), 24. Dezember 1987 (1987-12-24)

## Beschreibung

Elektrische Maschine mit einem in einem Gehäuse drehbar gelagerten Rotor mit aus dem Gehäuse herausgeführter Rotorwelle, einer Vielzahl von mit Abstand von der Rotor-Drehachse in gleichmäßigen Winkelabständen ortsfest im Gehäuse angeordneten Elektromagnet-Bauelementen mit jeweils einem eine Spulenwicklung aus einem oder mehreren Leitern tragenden Spulenkern und mit in gleichmäßigen Winkelabständen angeordneten, mit jeweils einer Polfläche zu den Stirnflächen der Spulenkerne gegenüberstehend ausgerichteten, drehfest im oder am Rotor gehalterten Permanentmagneten mit in Umfangsrichtung aufeinanderfolgend jeweils entgegengesetzter Polarität, wobei die Spulenkerne der Elektromagnet-Bauelemente derart parallel zur Drehachse der Rotorwele im Gehäuseinnern angeordnet sind, dass ihre gegenüberliegenden Stirnflächen jeweils in zwei voneinander beabstandeten, rechtwinklig zur Rotorwellen-Drehachse verlaufenden Ebenen liegen und die Enden der die Spulenwicklung bildenden elektrischen Leiter der einzelnen Elektromagnet-Bauelemente über eine elektrische oder elektronische Steuereinrichtung zu wenigstens zwei elektrische Anschlusspaare zusammengeschaltet sind und der Rotor wenigstens zwei sich radial bis vor die Stirnflächen der Spulenkerne erstreckende äußere Läuferscheiben aufweist, in denen die Permanentmagnete mit ihren Polflächen zu den jeweils zugeordneten Spulenkern-Stirnflächen ausgerichtet gehalten sind und in deren radial innerem Bereich Durchlassöffnungen vorgesehen sind.

Solche, an elektrische Stromquellen anschließbare Maschinen finden aufgrund des günstigen Leistungs-Gewichts-Verhältnisses beispielsweise als Radnaben-Motoren für Fahrzeugantriebe Verwendung. Dabei ist der Aufbau dieser Motoren so ausgestaltet, dass die Permanent-Magneten so in einer drehfest mit der Rotorwelle verbundenen Scheibe aus unmagnetischem Material gehalten sind, dass ihre Polflächen beidseitig frei in den Flachseiten des scheibenförmigen Rotorläufers münden, wobei die Magnete so angeordnet sind, dass in Umfangsrichtung auf der gleichen Seite des Läufers aufeinanderfolgende Polflächen jeweils entgegengesetzte Polarität aufweisen. In einem dem mittleren radialen Abstand der Permanent-Magneten von der Rotorwellen-Drehachse entsprechenden Abstand sind auf den dem scheibenförmigen Rotorläufer zugewandten Innenseiten der Gehäusedeckel oder -radialwänden die Elektromagnet-Bauelemente in Form von auf Metallkernen gewickelten Spulen angeordnet. Die Ansteuerung dieser Spulen erfolgt dabei vorzugsweise durch eine ein magnetisches Drehfeld erzeugende elektronische Steuerungseinrichtung, wodurch die grundsätzlich ebenfalls denkbare aber verschleißbehaftete Ansteuerung von auf einem Kommutator schleifenden Kontakten entfällt. Solche elektronisch angesteuerten Maschinen werden auch als bürstenlose Scheibenläufer-Maschinen bezeichnet (GB 2 275 371 A) .Darüber hinaus sind auch bürstenlose Scheibenläufer-Maschinen bekannt, bei denen der Rotor zwei sich radial bis bis vor die Stirnflächen der gehäusefest gehalterten Spulenkerne erstreckende äußere Läuferscheiben aufweist,in denen die Permanentmagneten mit ihren Polflächen zu den jeweils zugeordneten Spulenkern-Stirnflächen ausgerichtet gehalten sind (z.B. DE 197 01 797 A,Fig. 18; DE 42 14 483).

Der Erfindung liegt die Aufgabe zugrunde, die bekannten elektrischen Maschinen im Wirkungsgrad zu verbessern und ein Nachlassen der Leistung durch Verringerung der Magnetisierung der Permanent-Magnete im Laufe der Zeit zu minimieren. Dabei sollen die Maschinen preisgünstig und einfach zu produzieren sein und ein günstiges Leistungsgewicht haben.

Ausgehend von einer elektrischen Maschine der eingangs erwähnten Art wird diese Aufgabe erfindungsgemäß dadurch gelöst, dass jeweils Paare von in Umfangsrichtung aufeinanderfolgenden, am spulenzugewandten freien Ende jeweils mit einer Polfläche unterschiedlicher Polarität versehenen Schenkeln der in den beiden gegenüberliegenden äußeren Läuferscheiben vorgesehenen Permanentmagneten in den polflächenabgewandten Endbereichen durch jeweils ein das Magnetfeld weitgehend einschließendes Joch aus weich- oder hartmagnetischem Material miteinander verbunden sind, dass die Läuferscheiben durch radial verlaufende, den Hohlraum zwischen den Läuferscheiben in eine Anzahl von in Umfangsrichtung zueinander versetzte, zu den Elektromagnet-Bauelementen hin offene Kammern bildende radial verlaufende Wände miteinander verbunden sind, und dass die in den Läuferscheiben vorgesehenen radial inneren Durchlassöffnungen jeweils in den Kammern des Rotors münden. Die den mittig zwischen beiden Läuferscheiben angeordneten und somit zweckmäßig an der Umfangswandung des Gehäuses der Maschine starr befestigten Elektromagnet-Bauelemente zugeordneten Permanent-Magneten sind durch die jeweils zwei in Umfangsrichtung aufeinanderfolgende Einzelmagneten verbindenden Joche nach Art von Hufeisen-Magneten ausgebildet, wodurch ein Aufbau des Motors erreicht wird, bei dem das magnetische Feld der Permanent-Magneten weitestgehend innerhalb des magnetischen Materials der durch das Joch verbundenen Permanent-Magneten der Spulenkerne eingeschlossen gehalten wird, so dass lediglich in den schmalen Luftspalt zwischen den Stirnflächen der Spulenkerne der Elektromagnet-Bauelemente und den Polflächen der Elektromagneten ein geringes magnetisches Streufeld entstehen kann. Verluste des in den elektromagnetischen Bauelementen erzeugten magnetischen Drehfelds bei Schaltung der Maschine als Motor sind somit minimiert. Dies gilt auch bei Einsatz der Maschine als Generator, der sich beispielsweise für Windkraftanlagen etc. anbietet, wobei eine direkte Koppelung der Rotor-Drehachse mit der Abtriebsachse des Windrades ohne Zwischenschaltung eines Untersetzungsgetriebes möglich ist. Neben dem günstigen elektrischen Wirkungsgrad des Generators werden dann auch die mechanischen Verluste im Zwischengetriebe vermieden. Die die Läuferscheiben verbindenden, radial verlaufenden Wände wirken dabei wie die Schaufeln eines Gebläses, d.h. über die radial inneren Durchlassöffnungen in den Läuferscheiben wird Luft aus dem Gehäuse angesaugt und als Kühlluftstrom radial nach außen zwischen die Elektromagnet-Bauelemente geblasen.

Im einfachsten Fall ist im Gehäuseinnern der Maschine eine Reihe von Elektromagnet-Bauelementen vorgesehen, wobei der Rotor dann zwei auf gegenüberliegenden Seiten vor die Spulenkern-Stirnflächen der Elektromagnet-Bauelemente geführte äußere Läuferscheiben aufweist.

Eine Erhöhung der Leistung der Maschine kann ohne Vergrößerung des Durchmessers dadurch erfolgen, dass zwei oder mehr in Rotorwellen-Längsrichtung voneinander beabstandete Reihen von Elektromagnet-Bauelementen im Gehäuseinnern angeordnet werden, wobei der Rotor neben den beiden vor die in entgegengesetzte Richtungen weisenden äußeren Stirnflächen der Spulenkerne der äußersten Reihen geführten äußeren Läuferscheiben je eine in den Zwischenraum zwischen benachbarte Reihen von Elektromagnet-Bauelementen vor deren einander zugewandte Stirnflächen geführte zusätzliche Läuferscheibe mit Permanent-Magneten aufweist, und die jeweils auf gegenüberliegenden Seiten der jeweiligen zusätzlichen Läuferscheibe freiliegenden Polflächen unterschiedliche Polarität der Permanent-Magneten in radialer Richtung zu den Stirnflächen der Spulenkerne der Elektromagnet-Bauelement-Reihen ausgerichtet sind. Die in den zusätzlichen Läuferscheiben angeordneten Permanent-Magnete werden also - abweichend von den Permanent-Magneten in den äußeren Läuferscheiben - nicht als Hufeisen-Magnete, sondern als Stabmagnete kurzer Längenerstreckung ausgebildet, um so die Luftspalte zwischen den Polflächen dieser Magnete und den zugewandten Stirnflächen der Spulenkerne der Elektromagnet-Bauelemente klein zu halten und somit Verluste durch magnetische Streufelder zu vermeiden.

Das Gehäuseinnere wird dabei zweckmäßig gegen die Außenatmosphäre dicht abgeschlossen, wobei diese Abdichtung im Bereich der aus dem Gehäuse herausgeführten Welle der Maschine durch eine entsprechende Dichtung erfolgt. Die durch die radial inneren Durchlassöffnungen in den Läuferscheiben aus dem Gehäuseinnern angesaugte und zwischen den Elektromagnet-Bauelementen hindurchgeblasene Luft nimmt Wärme von den Spulen der Eleketromagnet-Bauelemente auf. Über den Außenumfang der Läuferscheiben tritt die umgewälzte Luft dann in den Zwischenraum zwischen dem Rotor und den Stirnwänden des Gehäuses über und wird zu den radial inneren Durchlassöffnungen zurückgesaugt. Auf diese Weise entsteht im Innern des Gehäuses eine in sich geschlossene Luftströmung, welche nicht nur die Elektromagnet-Bauelemente, sondern alle weiteren im Gehäuseinnern frei liegenden Flächen beaufschlagt und die Entstehung von örtlich höheren Temperaturen (hotspots) verhindert.

Zur Abfuhr der in der Maschine entstehenden und in die umgewälzte Luft abgegebene Wärme empfiehlt es sich, die Außen- und/oder Innenseite des Gehäuses zu verrippen, um so die wärmeabgebende bzw. aufnehmende Fläche des Gehäuses zu vergrößern. Dabei kann es im speziellen Fall von Vorteil sein, wenn auf den rotorzugewandten Innenflächen der Gehäuse-Stirnwände radial verlaufende Rippen vorgesehen sind, zwischen denen radiale Kanäle für die Rückführung der im Gehäuseinnern umgewälzten gasförmigen Atmosphäre gebildet sind.

Die radialen Kanäle können außerdem läuferscheibenseitig durch eine metallische Platte abgeschlossen sein, so dass zwischen den radialen Rippen lediglich am radial inneren und am radial äußeren Ende offene, mit dem Gehäuseinnern verbundene geschlossene Kanäle entstehen, durch welche die Rückführung der umgewälzten Luft erfolgt.

Die Kühlung der erfindungsgemäßen elektrischen Maschine kann alternativ auch durch Durchströmungen mit Umgebungsluft erfolgen, indem in den Durchlassöffnungen in den Läuferscheiben gegenüberliegenden Bereichen des Gehäuses Luft-Einlassöffnungen und radial nach außen versetzt Luft-Auslassöffnungen im Gehäuse vorgesehen werden.

Die Elektromagnet-Bauelemente sind dabei in gleichmäßigen Abständen in Umfangsrichtung angeordnet vorgesehen und treten von der Innenseite der Gehäuse-Umfangswand in den zwischen den Läuferscheiben gebildeten Zwischenraum vor.

Von Vorteil kann dabei eine Ausgestaltung insbesondere der Maschine der eingangs erwähnten Art sein, bei welcher jede Polfläche der Permanentmagneten in Umfangsrichtung eine Erstreckung aufweist, welche zwei Polflächen der Spulen von zwei in Umfangsrichtung aufeinanderfolgenden Elektromagnet-Bauelementen überdeckt,und dass die Steuerung so ausgebildet ist, dass sie zum Antrieb des Rotors bei jeweils einer Drehung desselben um einen dem Winkelabstand zwischen zwei in Umfangsrichtung aufeinanderfolgenden Elektromagnet-Bauelementen entsprechenden Winkelabstand aufeinanderfolgend die Polarität jedes zweiten in Umfangsrichtung aufeinanderfolgenden Elektromagnet-Bauelements umschaltet. Hierbei entsteht dann eine 2-phasige Maschine.

Alternativ können jeder Polfläche der Permanentmagneten in Umfangsrichtung auch drei Polflächen der Spulen von drei in Umfangsrichtung aufeinanderfolgenden Elektromagnet-Bauelementen zugeordneten sein, wobei die Steuerung dann so ausgebildet ist, dass sie zum Antrieb des Rotors nach dessen Drehung um einen dem Winkelabstand zwischen in Umfangsrichtung aufeinanderfolgende Elektromagnet-Bauelementen entsprechenden Winkelabstand die Polarität jedes dritten in Umfangsrichtung aufeinanderfolgenden Elektromagnet-Bauelements umschaltet, so dass eine 3-phasige Maschine entsteht.

Grundsätzlich können jeder Polfläche der Permanentmagneten in Umfangsrichtung auch mehr als drei Polflächen der Spulen von in Umfangsrichtung aufeinanderfolgenden Elektromagnet-Bauelementen zugeordnet sein, wobei die Steuerung dann so ausgebildet ist, dass sie zum Antrieb des Rotors nach einer Drehung desselben um einen dem Winkelabstand zwischen aufeinanderfolgenden Elektromagnet-Bauelementen entsprechenden Winkelabstand aufeinanderfolgend die Polarität von jeweils einem der in Umfangsrichtung aufeinanderfolgenden Elektromagnet-Bauelemente der einem Permanentmagneten zugeordneten Gruppe von Elektromagnet-Bauelementen umschaltet.

Durch Zusammenschaltung jeweils der Spulen von in Umfangsrichtung aufeinanderfolgenden Gruppen von jeweils einem Permanentmagneten zugeordneten Elektromagnet-Bauelementen wird der bauliche Aufwand der die Polarität der Spulen umsteuernden Leistungselektronik gegenüber einer Einzelansteuerung jeder einzelnen Spule deutlich verringert. So reduziert sich die elektrische Steuerschaltung bei einer 2-phasigen Maschine auf eine 2-phasige Wechselrichtersteuerung mit veränderbarer Amplitude und Frequenz. Zwischen zwei gegenüberliegenden hufeisenförmigen Magnetsegmenten befinden sich die vier Spulen von vier Elektromagnet-Bauelementen. Es werden gleichzeitig die erste und die dritte und im nächsten Schritt die zweite und die vierte Spule umgeschaltet. Die Polarität der ersten und dritten sowie der zweiten und vierten Spule sind entgegengesetzt. Die erste und dritte sowie die zweite und vierte Spule können also fest miteinander verdrahtet werden, da die dritte und vierte Spule jeweils spiegelbildlich zur ersten und zweiten Spule angesteuert werden. Es ist also möglich, mit einer 2-phasigen Steuerung in der Praxis eine 4-phasige Ansteuerung zu verwirklichen.

Die Drehrichtung und die Drehzahl des Motors kann dadurch bestimmt werden, dass der Umschaltpunkt für die Spulen für die Umschaltung von einer auf die andere Polarität über einen Positionsgeber angesteuert wird, welcher die relative Drehstellung des Rotors im Gehäuse abtastet. Der Umschaltpunkt für die Ansteuerung der Spule wird also durch den Sensor bestimmt, der die Frequenz vorgibt. Dabei ist die Umschaltfrequenz nicht mit der Motordrehzahl identisch, sondern sie gilt für ein Magnetsegment. Besteht der Motor aus zehn Segmenten mit zwei Schaltimpulsen pro Phase und Segment, so ergibt sich also eine 20-fache Schaltfrequenz gegenüber der Motordrehzahl.

Als Positionsgeber wird dabei zweckmäßig ein die relative Drehstellung des Motors in bezug auf das Gehäuse berührungslos abtastender Sensor, insbesondere ein optischer Sensor, vorgesehen.

Die Elektromagnet-Bauelemente können mit Vorteil jeweils auf gesonderten Trägerelementen gehaltert sein, welche in jeweils einer zugeordneten Öffnung in der Umfangswand des Gehäuses derart montierbar sind, dass die Polflächen der Spulen der Elektromagnet-Bauelemente in der bestimmungsgemäßen Montagestellung in Ausrichtung zu den Polflächen der Permanentmagnete zwischen den Läuferscheiben stehen. Im Falle der Beschädigung oder des Ausfalls der Spule einzelner Elektromagnet-Bauelemente können diese Elektromagnet-Bauelemente dann einzeln demontiert und repariert oder durch funktionsfähige neue Elektromagnet-Bauelemente ersetzt werden.

Alternativ ist auch die vormontierte Anordnung der Elektromagnet-Bauelemente in einer ringförmigen Halterung denkbar, die ihrerseits im Gehäuseinnern gehaltert ist. Diese Ausgestaltung setzt allerdings die Möglichkeit der gesonderten Montage wenigstens einer der Läuferscheiben des Rotors voraus.

Die Elektromagnet-Bauelemente können jeweils auch zwei gesonderte Spulen mit entgegengesetztem Windungssinn, d.h. umgepolte differenziale Wicklungen, aufweisen, die dann wahlweise durch eine elektrische oder elektronische Steuereinrichtung ansteuerbar sind. Auf diese Weise ist dann die Polarität des jeweiligen Elektromagnet-Bauelements - abhängig von der Ansteuerung der jeweiligen Spulenwicklung durch elektronische Ansteuerung - umkehrbar.

Wenn die erfindungsgemäße Maschine als Generator eingesetzt werden soll, werden die Enden der die Spulenwicklung bildenden elektrischen Leitungen jedes Elektromagnet-Bauelements zweckmäßig an die Eingangsanschlüsse einer gesonderten Gleichrichterschaltung angeschlossen, wobei dann die Gleichrichterschaltungen ausgangsseitig auf ein Paar von elektrischen Sammelleitungen zusammengeschaltet sind. Der sich aus der Summe der in den Einzelspulen über die jeweils zugeordnete Gleichrichterschaltung erzeugten Gleichströme zusammengesetzte Gleichstrom kann dann der Sammelleitung entnommen werden. Diese Ausgestaltung empfiehlt sich insbesondere dann, wenn der Generator mit wechselnden Drehzahlen angetrieben wird, wie dies beispielsweise bei der elektrischen Stromerzeugung mit Windkraft bei Windkraftanlagen mit Rotorblättern ohne Blattverstellung aufgrund unterschiedlicher Windgeschwindigkeiten und -stärken der Fall sein kann.

Der durch einen derartigen Generator erzeugte Gleichstrom kann dann in einer nachgeschalteten elektronischen Wechselrichterschaltung in einen netzsynchronen Wechsel- bzw. Drehstrom umgeformt werden.

Die Erfindung ist in der folgenden Beschreibung von Ausführungsbeispielen in Verbindung mit der Zeichnung näher erläutert, und zwar zeigt:
- Fig. 1: einen durch die Drehachse der Rotorwelle gelegten Längsmittelschnitt durch ein erstes Ausführungsbeispiel einer erfindungsgemäßen elektrischen Maschine mit einer Reihe von Elektromagnet-Bauelementen und zwei äußeren Läuferscheiben;
- Fig. 2: einen in der Schnittführung der Figur 1 entsprechenden Längsmittelschnitt durch ein zweites Ausführungsbeispiel mit zwei in Längsrichtung voneinander beabstandeten Reihen von Elektromagnet-Bauelementen und zusätzlich einer mittleren, zwischen den beiden Reihen von Elektromagnet-Bauelementen vorgesehenen Läuferscheibe;
- Fig. 3: eine Schnittansicht der elektrischen Maschine gemäß Fig. 1, gesehen in Richtung der Pfeile 3-3 in Fig. 1;
- Fig. 4: eine Schnittansicht durch den Rotor der in den Fig. 1 und 3 gezeigten elektrischen Maschine in der der Fig. 3 entsprechenden Schnittebene;
- Fig. 5: eine Schnittansicht durch den Rotor, gesehen in Richtung der Pfeile 5-5 in Figur 4; und
- Fig. 6: ein schematisches Schaltbild eines in der erfindungsgemäßen elektrischen Maschine einsetzbaren Elektromagnet-Bauelements in einer Sonderausführung mit zwei gesonderten, mit entgegengesetztem Windungssinn auf dem Spulenkern aufgebrachten Spulenwicklungen, die wahlweise von einer elektronischen Steuereinrichtung ansteuerbar und so in der Polarität wahlweise umschaltbar sind.

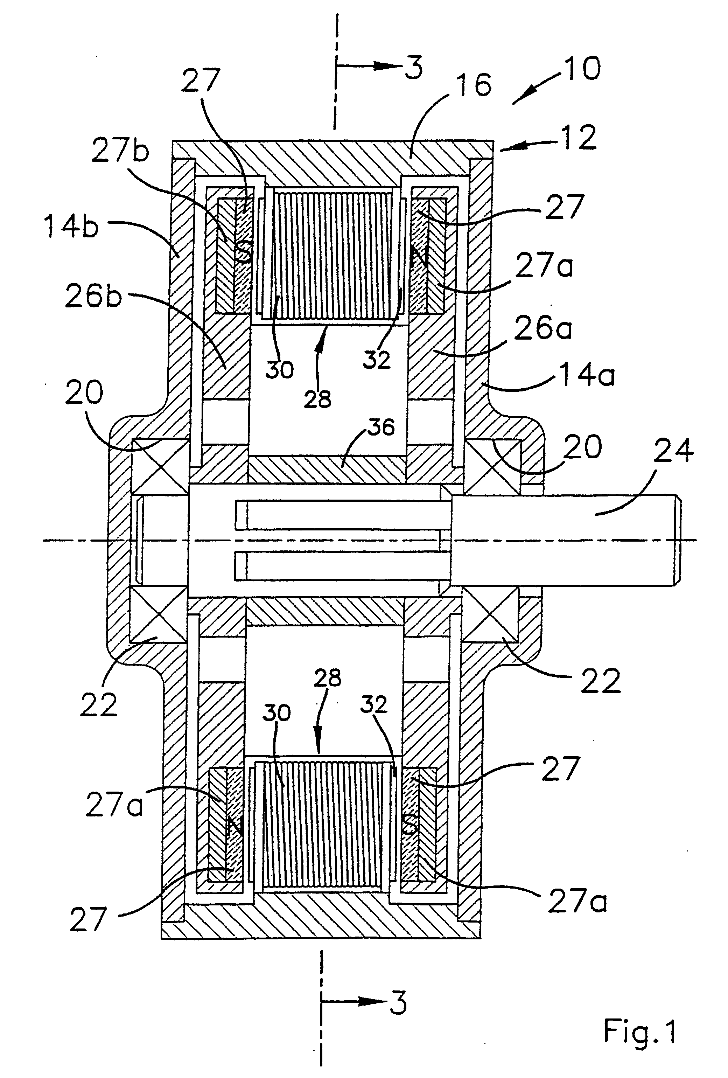

Das in Fig. 1 gezeigte, in seiner Gesamtheit mit 10 bezeichnete Ausführungsbeispiel einer erfindungsgemäßen elektrischen Maschine ist grundsätzlich als Motor oder Generator einsetzbar. Die Maschine 10 weist ein im speziellen Fall in Axialrichtung relativ kurz bauendes Gehäuse 12 auf, welches sich aus zwei scheibenartigen Gehäusestirnwänden 14a, 14b relativ großen Durchmessers und der praktisch zu einem zylindrischen Ring relativ geringer Länge umgestalteten eigentlichen Gehäuse-Umfangswand 16 zusammensetzt. Gehäuse-Stirnwände 14a, 14b und Gehäuse-Umfangswand 16 sind durch - nicht gezeigte - Schrauben oder andere Befestigungsmsittel demontierbar miteinander verbunden, wobei die Gehäuse-Umfangswand 16 zur Erleichterung der Montage und Demontage der Maschine 10 auch in einer durch die Längsmittelachse des Gehäuses verlaufenen Trennebene in zwei miteinander verschraubbare oder in anderer Weise miteinander verbindbare Umfangswand-Hälften geteilt sein kann.

In den Stirnwänden 14a, 14b ist jeweils mittig eine Lageraufnahme 20 für ein Radiallager 22 gebildet, in denen eine die Gehäuse-Stirnwand 14a durchsetzende Welle 24 drehbar gelagert ist.

In den radial außenliegenden Bereichen der Läuferscheiben 26a, 26b sind in Umfangsrichtung aufeinander folgend in gleichmäßigen Winkelabständen Permanentmagneten 27 gehalten, deren nach innen, d.h. zur jeweils gegenüberliegenden Läuferscheibe 26b, 26a weisende Polflächen in Umfangsrichtung aufeinander folgend unterschiedliche Polarität aufweisen. Auch die sich in Axialrichtung gegenüberliegenden Polflächen der Permanentmagnete 27 der beiden Läuferscheiben haben unterschiedliche Polarität. Die Permanentmagnete 27 sind in Aussparungen der Läuferscheiben 26a, 26b gehalten, wobei in Umfangsrichtung aufeinander folgende Permanentmagnete 27 jeweils durch Verbindung ihrer spulenabgewandten Stirnflächen durch ein das Magnetfeld weitgehend einschließendes Joch 27a aus hart- oder weichmagnetischem Material zu einem Hufeisen-Magneten zusammengeschlossen sind.

Auf der Innenwandung der Gehäuse-Umfangswand 16 sind - ebenfalls in gleichmäßigen Winkelabständen versetzt - Elektromagnet-Bauelemente 28 mit jeweils einem eine Spulenwicklung 30 aus einem oder mehreren Leitern tragenden Spulenkern 32 angeordnet. Die Enden der Leiter der Spulenwicklung 30 sind an einer elektronischen Steuereinrichtung angeschlossen, welche den der Steuereinrichtung von einer elektrischen Stromquelle zugeführten elektrischen Strom derart gesteuert in die Spulen 30 einspeist, dass in den Elektromagnet-Bauelementen 28 ein magnetisches Drehfeld erzeugt wird, welches in Wechselwirkung mit den auf den Läuferscheiben 26a, 26b angeordneten Permanentmagneten 27 eine relative Drehung des Rotors und somit der Welle 24 zum Gehäuse 12 zur Folge hat. In Verbindung mit der erwähnten - nicht gezeigten - elektronischen Steuerung stellt die elektrische Maschine gemäß Fig. 1 also einen von einer Gleichstromquelle antreibbaren bürstenlosen elektrischen Axialfeldmotor dar. Wenn umgekehrt die Welle 24 angetrieben wird, wird von den sich mit den Läuferscheiben (26a, 26b) drehenden Permanentmagneten 27 in den Elektromagnet-Bauelementen 28 ein elektrisches Drehfeld erzeugt, welches an den Enden der Spulen 30 der Elektromagnet-Bauelementen 28 abnehmbar und durch eine geeignete Gleichrichterschaltung als Gleichstrom genutzt werden kann. Durch entsprechende elektronische Steuereinrichtungen kann das elektrische Drehfeld alternativ auch in Dreh- oder Wechselstrom umgeformt werden.

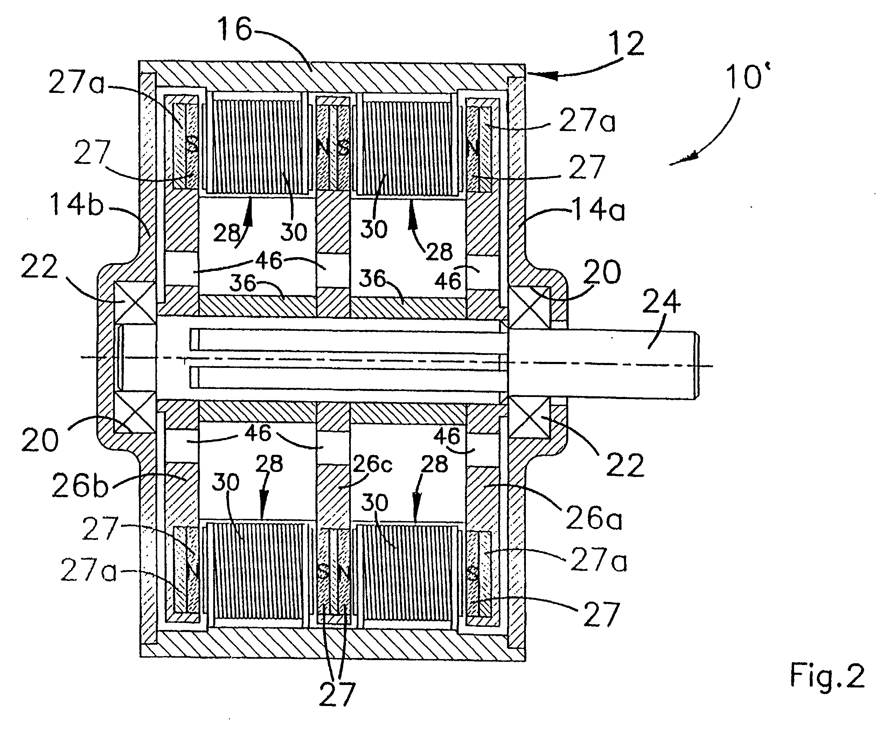

In Fig. 2 ist ein in seiner Gesamtheit mit 10' bezeichnetes Ausführungsbeispiel einer erfindungsgemäßen elektrischen Maschine dargestellt, deren Leistung ohne Durchmesservergrößerung dadurch erhöht ist, dass in Rotorwellen-Längsrichtung zwei voneinander beabstandete Reihen von Elektromagnet-Bauelementen 28 im Innern des Gehäuses 12 angeordnet sind. Der Rotor weist neben den beiden vor die in entgegengesetzte Richtung weisenden äußeren Stirnflächen der Spulenkerne der Elektromagnet-Bauelemente 28 geführten äußeren Läuferscheiben 26a, 26b eine zusätzlich in den Zwischenraum zwischen die beiden Reihen von Elektromagnet-Bauelementen 28 geführte dritte Läuferscheibe 26c auf. In dieser mittleren Läuferscheibe 26c sind Permanentmagneten 27 eingelassen. Auf diese Weise können die Luftspalte zwischen den Polflächen der Permanentmagnete 27 und den Stirnflächen der Spulenkerne 32 der Elektromagnet-Bauelemente 28 in der mittleren Läuferscheibe 26c klein gehalten und somit Verluste durch magnetische Streufelder vermieden werden. Auch hier kann die Gehäuse-Umfangswand 16 wieder aus Montagegründen entlang einer mittigen Ebene geteilt sein.

Abgesehen von der in Axialrichtung versetzt angeordneten zweiten Reihe von Elektromagnet-Bauelementen 28 und der Anordnung der zusätzlichen mittleren Läuferscheibe 26c entspricht die Maschine funktionell der vorstehenden Verbindung mit Fig. 1 beschriebene elektrischen Maschine, so dass es bezüglich der Ausgestaltung der elektrischen Maschine 10' im übrigen genügt, auf die vorausgehende Beschreibung der Maschine 10 zu verweisen, zumal funktionell gleichen Bauteil der beiden Maschinen in den Zeichnungsfiguren gleiche Bezugszeichen zugeordnet sind.

Es ist ersichtlich, dass eine weitere Leistungserhöhung ohne Durchmesservergrößerung durch Anordnung einer weiteren oder mehrerer weiterer axial versetzte Reihen von Elektromagnet-Bauelementen möglich ist, zwischen denen dann jeweils wieder eine zusätzliche Läuferscheibe mit Permanentmagneten angeordnet wird.

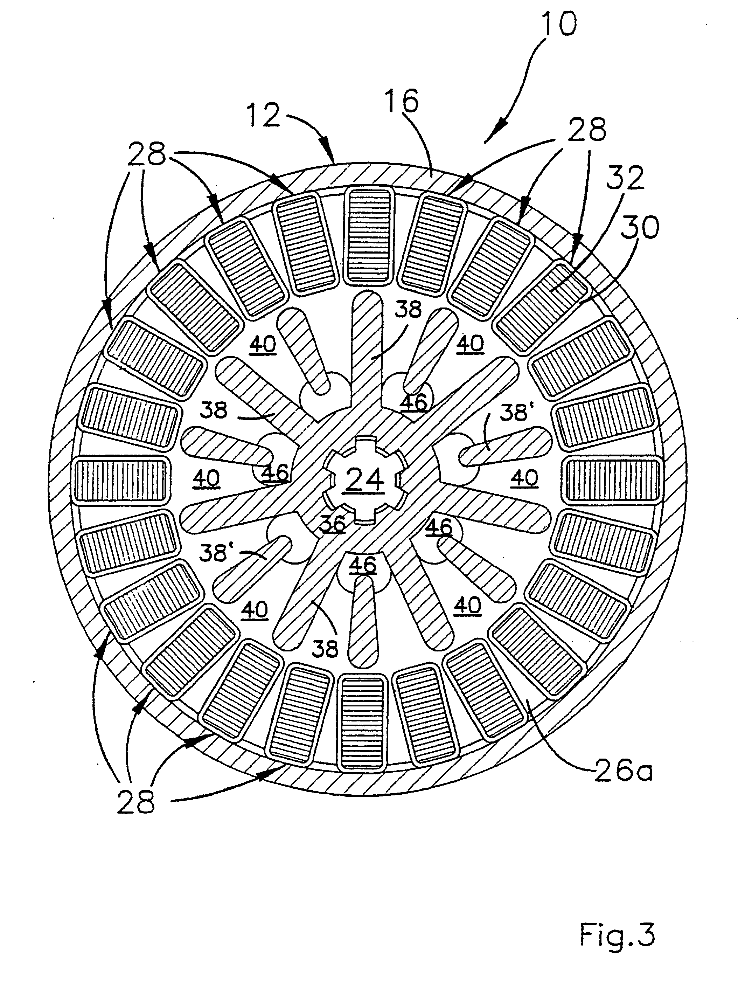

Aus der in Fig. 3 schematisiert dargestellten Schnittansicht der in Fig. 1 gezeigten elektrischen Maschine 10 ist erkennbar, dass von der Gehäuse-Umfangswand 16 des Gehäuses 12 in gleichmäßiger Verteilung in Umfangsrichtung zueinander versetzt - im dargestellten Fall insgesamt vierundzwanzig - Elektromagnet-Bauelemente 28 angeordnet sind.

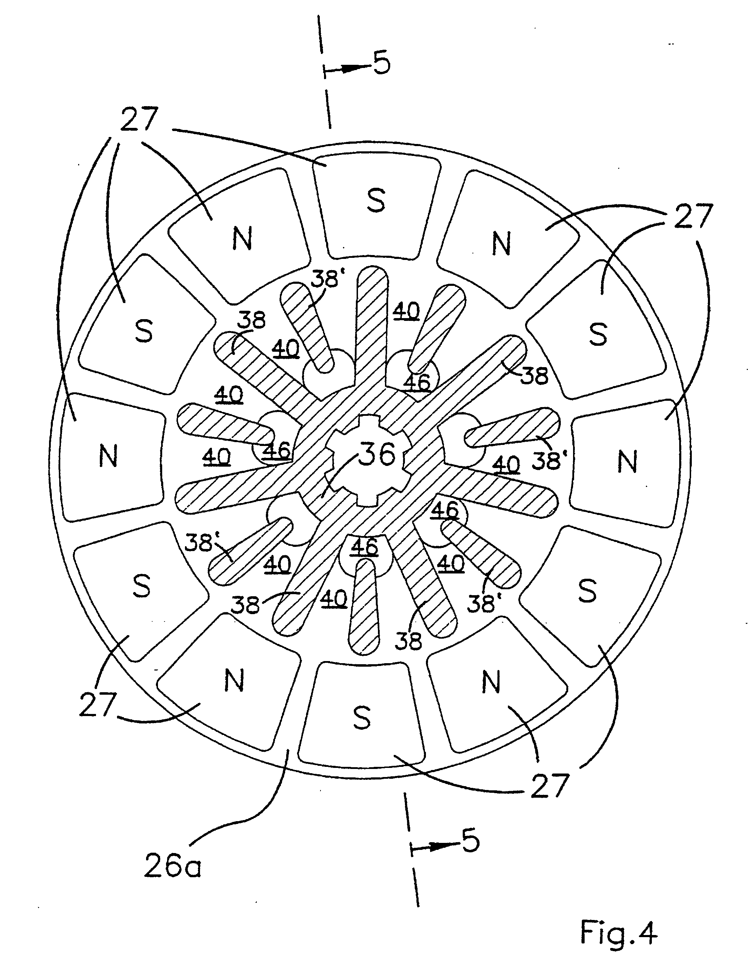

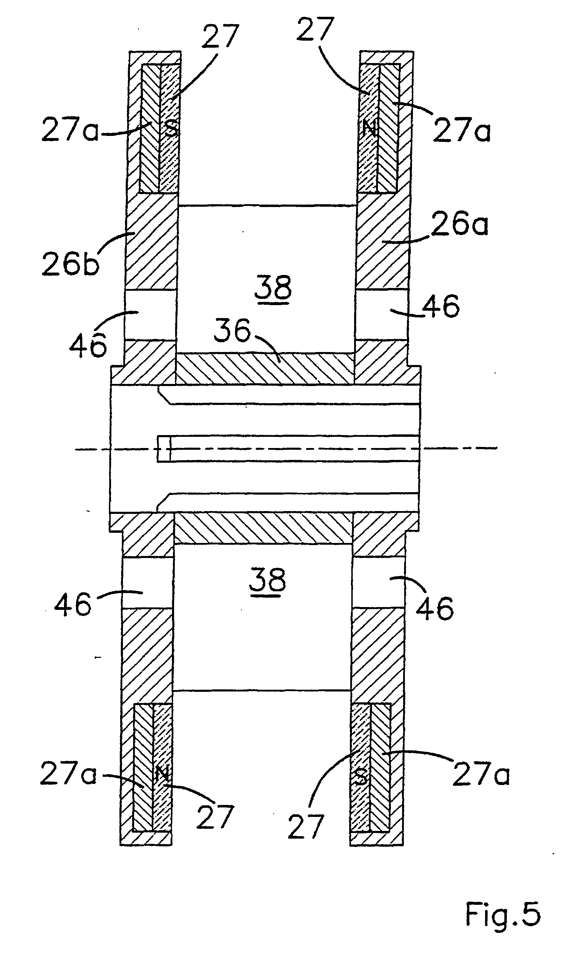

Die Welle 24 trägt - wie erwähnt - den auf ihr drehfest gehaltenen Rotor, der in den Figuren 4 und 5 auch noch gesondert dargestellt ist und die beiden voneinander beabstandeten, sich radial bis in die Nähe der Gehäuse-Umfangswand 16 erstreckenden Läuferscheiben 26a, 26b aus unmagnetischem Material aufweist, in denen die in Umfangsrichtung aufeinander folgend in gleichmäßigen Winkelabständen gehaltene Permanentmagnete 27 angeordnet sind, und zwar im dargestellten Fall insgesamt zwölf Permanentmagnete, deren innen, d.h. zur jeweils gegenüber liegenden Läuferscheibe 26b, 26a weisenden Polflächen in Umfangsrichtung aufeinander folgend unterschiedliche Polarität aufweisen. Auch die in Axialrichtung gegenüber liegenden Polflächen der Permanentmagnete 27 der beiden Läuferscheiben 26a, 26b haben unterschiedliche Polarität. In Umfangsrichtung erstreckt sich jede Polfläche eines Permanentmagneten im dargestellten Ausführungsbeispiel über zwei Polflächen der Spulenkerne 32 von in Umfangsrichtung aufeinander folgenden Elektromagnet-Bauelementen.

Die nicht gezeigten Enden der Leiter der Spulenwicklung 30 der Elektromagnet-Bauelemente sind aus dem Gehäuse herausgeführt und dann in geeigneter Weise an die bereits angesprochene elektronischen Steuereinrichtung angeschlossen, welche den von einer elektrischen Stromquelle zugeführten elektrischen Strom derart gesteuert in die Spulen der Elektromagnet-Bauelemente einspeist, dass diese das magnetisches Drehfeld erzeugen, welches in Wechselwirkung mit den auf den Läuferscheiben 26a, 26b angeordneten Permanentmagneten die Drehung des Motors 10 und somit der Welle 24 zur Folge hat.

Die Läuferscheiben 26a, 26b sind jeweils auf den äußeren Stirnflächen eines Nabenkörpers 36 (Fig. 4 und 5) angeordnet, von dem radiale Wände 38 in den Zwischenraum zwischen den Läuferscheiben 26a, 26b vorspringen, deren radiale Erstreckung so gewählt ist, dass die von der Gehäuse-Umfangswand 16 radial nach innen vortretende Elektromagnet-Bauelemente 28 noch radial in den Zwischenraum zwischen den Läuferscheiben 26a, 26b eintreten können, ohne an den radial äußeren Enden der vom Nabenkörper 36 vortretenden radialen Wände 38 anzustoßen. Jeweils zwischen zwei in Umfangsrichtung aufeinander folgenden radialen Wänden 38 des Nabenkörpers 36 sind zusätzlich an den einander zugewandten Innenflächen der Läuferscheiben 26a, 26b befestigte radiale Wände 38' vorgesehen, wodurch eine Reihe von in Umfangsrichtung aufeinander folgenden Kammern 40 gebildet werden, die innen vom Nabenkörper 36 und seitlich von den Läuferscheiben 26a, bzw. 26b abgeschlossen sind. Unmittelbar oberhalb des Nabenkörpers 36 sind in beiden Läuferscheiben 26a und 26b in die Kammern 40 führende innere Durchlassöffnungen 46 vorgesehen. Bei sich drehendem Rotor kann also über die Durchlaßöffnungen 46 Luft aus dem Gehäuseinnern in die Kammern 40 übertreten und wird dort durch die Zentrifugalkraft des sich drehenden Rotors radial nach außen beschleunigt. Diese radial nach außen strömende Luft tritt dann aus den Kammern 40 aus und trifft auf die von der Umfangswand 16 des Gehäuses 12 in den Zwischenraum zwischen den Läuferscheiben 26a, 26b vortretenden Elektromagnet-Bauelemente und tritt durch die Zwischenräume zwischen diesen Bauelementen hindurch, umströmt diese und kann dann über die Umfangsfläche der Läuferscheiben hinweg wieder in den Zwischenraum zwischen den Läuferscheiben 26a, 26b und den Gehäuse-Stirnwänden 14a, 14b übertreten. Der vom Nabenkörper, den radialen Wänden 38 und 38' und den Läuferscheiben 26a, 26b gebildete Rotor stellt also gleichzeitig das Laufrad eines Gebläses dar, welches eine Zwangs-Umlaufströmung der im Gehäuse eingeschlossenen Luft oder - in Sonderfällen - einer dort eingebrachten Gasfüllung bewirkt. Sobald die Temperatur in der erzwungenen Umlaufströmung über die Umgebungstemperatur ansteigt, wird Wärme über das Gehäuse, d.h. die Gehäuse-Umfangswand 16 und die Gehäuse-Stirnwände 14a und 14b zur Außenatmosphäre abgeführt. Durch Verrippung der Flächen des Gehäuses kann sowohl der Wärmeübergang von der erzwungenen Umlaufströmung im Gehäuseinnern auf das Gehäuse als auch die Wärmeabgabe vom Gehäuse an die Umgebungsatmosphäre gefördert werden. Anstelle der erzwungenen Umlaufströmung im Gehäuseinnern kann auch eine Kühlung mit Außenluft erfolgen, wenn in den Gehäuse-Stirnwänden 14a und 14b etwa in Ausrichtung zu den Durchlassöffnungen 46 in den Läuferscheiben 26a, 26b Lufteinlässe und in der Gehäuse-Umfangswand 16 im Bereich zwischen den Elektromagnet-Bauelementen 28 Auslassöffnungen für die geförderte Umgebungsluft vorgesehen werden.

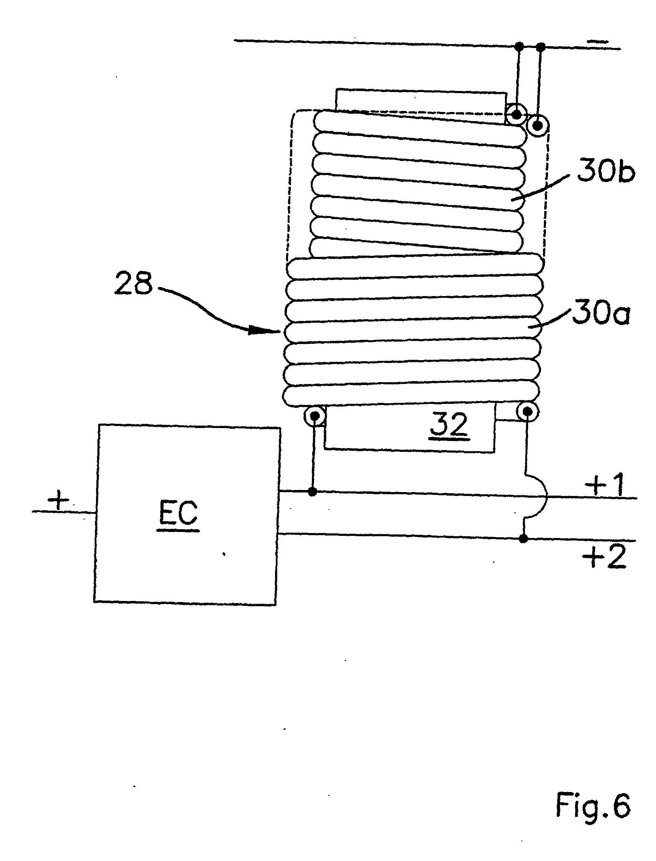

In Fig. 6 ist schematisch die Schaltung eines Elektromagnet-Bauelements 28 einer Sonderausführung der Elektromagnet-Bauelemente dargestellt, deren Spulenkern zwei in entgegengesetztem Windungssinn übereinander gewickelte Spulenwicklungen 30a und 30b trägt. Es ist erkennbar, dass die Enden der beiden Spulenwicklungen 30a, 30b an die gleiche Strom führende Leitung angeschlossen sind, während die anderen Enden der beiden Spulenwicklungen jeweils an gesonderte zu einer elektronischen Steuereinheit EC führende Leitung angeschlossen sind, über welche die zweite Stromleitung wahlweise auf die erste Spulenwicklung 30a oder die zweite Spulenwicklung 30b geschaltet werden kann.

Zu der in Fig. 6 getroffenen Darstellung der Spulenwicklung ist noch darauf hinzuweisen, dass die Spulenwicklung 30a hier nur zur Hälfte dargestellt ist, um den oberen Teil der unter ihr liegenden Spulenwicklung 30b darstellen zu können. In der Praxis erstreckt sich die Wicklung 30a über die volle Länge des Spulenkerns 32. Man spricht in einem solchen Fall auch von umgepolten Differenzial-Wicklungen.

Es ist ersichtlich, dass im Rahmen des Erfindungsgedankens Abwandlungen und Weiterbildungen der beschriebenen Ausführungsbeispiele der elektrischen Maschine 10 bzw. 10' verwirklichbar sind.

Beim Antrieb der elektrischen Maschine 10 als Elektromotor kann anstelle des in der Beschreibung vorausgesetzten Drehabtriebs über die Welle 24 alternativ auch die Welle 24 über einen geeigneten Flansch an einem starren Bauteil befestigt werden. Bei Beaufschlagung des Motors mit Strom wird dann das Gehäuse 12 in Drehung versetzt. In dieser Ausgestaltung kann die elektrische Maschine beispielsweise als Radnabenmotor zum Antrieb von Fahrzeugen direkt an den Rädern eingesetzt werden. Um dann die Elektromagnet-Bauelemente 28, die sich in diesem Falle ja zusammen mit dem Gehäuse 12 drehen würden, nicht über Schleifkontakte oder Bürsten mit elektrischem Strom ansteuern zu müssen, wird zweckmäßig die Anordnung der Permanentmagnete 27 und der Elektromagnet-Bauelemente 28 vertauscht, d.h. die Elektromagnet-Bauelemente werden in dem nunmehr auf der festen Welle undrehbar gehalterten Rotor angeordnet, während die Permanentmagnete 27 auf den Innenflächen des Gehäuses, d.h. den Innenflächen der Gehäuse-Stirnwände 14a, 14b angeordnet werden. Es handelt sich dann praktisch um eine kinematische Umkehr der elektrischen Maschine 10. Die Stromzufuhr zu den Elektromagnet-Bauelementen erfolgt dann über fest in der Welle verlegte Zuleitungen.

## Patentansprüche

1. Elektrische Maschine (10; 10') mit einem in einem Gehäuse (12) drehbar gelagerten Rotor (26a, 26b; 26c; 36) mit aus dem Gehäuse (12) herausgeführter Rotorwelle (24), einer Vielzahl von mit Abstand von der Rotor-Drehachse in gleichmäßigen Winkelabständen ortsfest im Gehäuse angeordneten Elektromagnet-Bauelementen (28) mit jeweils einem eine Spulenwicklung (30) aus einem oder mehreren Leitern tragenden Spulenkern (32) und mit in gleichmäßigen Winkelabständen angeordneten, mit jeweils einer Polfläche zu den Stirnflächen der Spulenkerne (32) gegenüberstehend ausgerichteten drehfest im oder am Rotor gehalterten Permanentmagneten (27) mit in Umfangsrichtung aufeinanderfolgend jeweils entgegengesetzter Polarität, wobei die Spulenkerne (32) der Elektromagnet-Bauelemente (28) derart parallel zur Drehachse der Rotorwelle (24) im Gehäuseinnern angeordnet sind, dass ihre gegenüberliegenden Stirnflächen jeweils in zwei voneinander beabstandeten rechtwinklig zur Rotorwellen-Drehachse verlaufenden Ebenen liegen und die Enden der die Spulenwicklung (30) bildenden elektrischen Leiter der einzelnen Elektromagnet-Bauelemente (28) über eine elektrische oder elektronische Steuereinrichtung zu wenigstens zwei elektrischen Anschlüssen zusammengeschaltet sind und der Rotor wenigstens zwei sich radial bis vor die Stirnflächen der Spulenkerne erstreckende äußere Läuferscheiben (26a, 26b; 26c) aufweist, in denen die Permanentmagnete (27) mit ihren Polflächen zu den jeweils zugeordneten Spulenkern-Stirnflächen ausgerichtet gehalten sind,und in deren radial innerem Bereich Durchlassöffnungen (46) vorgesehen sind, **dadurch gekennzeichnet,**
**dass** jeweils Paare von in Umfangsrichtung aufeinanderfolgenden, am spulenzugewandten freien Ende jeweils mit einer Polfläche unterschiedlicher Polarität versehenen Schenkeln der in den beiden gegenüberliegenden äußeren Läuferscheiben (26a, 26b) vorgesehenen Permanentmagneten (27) in den polflächenabgewandten Endbereichen durch jeweils ein das Magnetfeld weitgehend einschließendes Joch (27a) aus weich- oder hartmagnetischem Material miteinander verbunden sind,
**dass** die Läuferscheiben (26a, 26b) durch radial verlaufende, den Hohlraum zwischen den Läuferscheiben in eine Anzahl von in Umfangsrichtung zueinander versetzte, zu den Elektromagnet-Bauelementen (28) hin offene Kammern (40) bildende radial verlaufende Wände (38; 38') miteinander verbunden sind, und
**dass** die in den Läuferscheiben (26a, 26b) vorgesehenen radial inneren Durchlassöffnungen (46) jeweils in den Kammern (40) des Rotors münden.

2. Maschine nach Anspruch 1, **dadurch gekennzeichnet, dass** im Gehäuseinnern eine Reihe von Elektromagnet-Bauelementen (28) vorgesehen ist, und dass der Rotor zwei auf gegenüberliegenden Seiten vor die Spulenkern-Stirnflächen der Elektromagnet-Bauelemente (28) geführte äußere Läuferscheiben (26a, 26b) aufweist.

3. Maschine nach Anspruch 1, **dadurch gekennzeichnet, dass** zwei oder mehr in Rotorwellen-Längsrichtung voneinander beabstandete Reihen von Elektromagnet-Bauelementen (28) im Gehäuseinnern angeordnet sind und dass der Rotor neben den beiden vor die in entgegengesetzte Richtung weisenden äußeren Stirnflächen der Spulenkerne (32) der äußersten Reihen geführten äußeren Läuferscheiben (26a, 26b) je eine in den Zwischenraum zwischen benachbarter Reihen von Elektromagnet-Bauelementen (28) vor deren einander zugewandte Stirnflächen geführte zusätzliche Läuferscheibe (26c) mit Permanentmagneten (27) aufweist, wobei die jeweils auf gegenüberliegenden Seiten der jeweiligen zusätzlichen Läuferscheibe freiliegenden Polflächen unterschiedlicher Polarität der Permanentmagneten (27) in radialer Richtung zu den Stirnflächen der Spulenkerne (32) der Elektromagnet-Bauelement-Reihen ausgerichtet sind.

4. Maschine nach einem der Ansprüche 1 bis 3, **dadurch gekennzeichnet, dass** das Gehäuseinnere gegen die Außenatmosphäre dicht abgeschlossen ist.

5. Maschine nach Anspruch 4, **dadurch gekennzeichnet, dass** die Außen- und/oder Innenseite des Gehäuses (12) zur Vergrößerung seiner wärmeabgebenden bzw. aufnehmenden Fläche verrippt ist.

6. Maschine nach Anspruch 5, **dadurch gekennzeichnet, dass** auf den rotorzugewandten Innenflächen der Gehäuse-Stirnwände (14a; 14b) radial verlaufende Rippen vorgesehen sind, zwischen denen radiale Kanäle für die Rückführung der im Gehäuseinnern umgewälzten gasförmigen Atmosphäre gebildet sind.

7. Maschine nach Anspruch 6, **dadurch gekennzeichnet, dass** die radialen Kanäle läuferscheibenseitig durch eine metallische Platte abgeschlossen sind, so daß zwischen den radialen Wänden (38; 38') lediglich am radial inneren und am radial äußeren Ende offene, mit dem Gehäuseinnern verbundene geschlossene Kanäle entstehen.

8. Maschine nach einem der Ansprüche 1 bis 3, **dadurch gekennzeichnet, dass** in den den Durchlassöffnungen (46) in den Läuferscheiben (26a; 26b) gegenüberliegenden Bereichen des Gehäuses (12) Luft-Einlassöffnungen und radial nach außen versetzt Luft-Auslassöffnungen im Gehäuse (12) vorgesehen sind.

9. Maschine nach einem der Ansprüche 1 bis 8, **dadurch gekennzeichnet, dass** die Elektromagnet-Bauelemente (28) in gleichmäßigen Abständen in Umfangsrichtung verteilt von der Innenseite der Gehäuseumfangswand (16) in den zwischen den Läuferscheiben (26a, 26b) gebildeten Zwischenraum vortreten.

10. Elektrische Maschine nach einem der Ansprüche 1 bis 9, **dadurch gekennzeichnet, dass** jede Polfläche der Permanentmagneten (27) in Umfangsrichtung eine Erstreckung aufweist, welche zwei Polflächen der Spulen (30, 32) von zwei in Umfangsrichtung aufeinanderfolgenden Elektromagnet-Bauelementen (28) überdeckt, und dass die Steuerung so ausgebildet ist, dass sie zum Antrieb des Rotors bei jeweils einer Drehung desselben um einen dem Winkelabstand zwischen zwei in Umfangsrichtung aufeinanderfolgenden Elektromagnet-Bauelementen entsprechenden Winkelabstand aufeinanderfolgend die Polarität jedes zweiten in Umfangsrichtung aufeinanderfolgenden Elektromagnet-Bauelements (28) umschaltet.

11. Elektrische Maschine nach einem der Ansprüche 1 bis 9, **dadurch gekennzeichnet, dass** jeder Polfläche der Permanentmagneten (27) in Umfangsrichtung drei Polflächen der Spulen (30, 32) von drei in Umfangsrichtung aufeinanderfolgenden Elektromagnet-Bauelemente (28) zugeordnet sind, und dass die Steuerung so ausgebildet ist, dass sie zum Antrieb des Rotors nach dessen Drehung um einen dem Winkelabstand zwischen in Umfangsrichtung aufeinanderfolgende Elektromagnet-Bauelementen entsprechenden Winkelabstand die Polarität jedes dritten in Umfangsrichtung aufeinanderfolgenden Elektromagnet-Bauelements (28) umschaltet.

12. Elektrische Maschine nach einem der Ansprüche 1 bis 9, **dadurch gekennzeichnet, dass** jeder Polfläche der Permanentmagneten (27) in Umfangsrichtung mehr als drei Polflächen der Spulen von in Umfangsrichtung aufeinanderfolgenden Elektromagnet-Bauelemente (28) zugeordnet sind, und dass die Steuerung so ausgebildet ist, dass sie zum Antrieb des Rotors nach einer Drehung desselben um eine im Winkelabstand zwischen aufeinanderfolgenden Elektromagnet-Bauelementen entsprechenden Winkelabstand aufeinanderfolgend die Polarität von jeweils einem der in Umfangsrichtung aufeinanderfolgenden Elektromagnet-Bauelemente (28) der einem Permanentmagnet zugeordneten Gruppe von Elektromagnet-Bauelementen umschaltet.

13. Maschine nach einem der Ansprüche 10 bis 12, **dadurch gekennzeichnet, dass** der Steuereinrichtung zur Auslösung der Umschaltung der Polarität der Elektromagnet-Bauelemente (28) ein die relative Drehstellung des Rotors im Gehäuse (12) abtastender Positionsgeber zugeordnet ist.

14. Maschine nach Anspruch 13, **dadurch gekennzeichnet, dass** der Positionsgeber als die relative Drehstellung des Rotors in bezug auf das Gehäuse (12) berührungslos abtastender Sensor, insbesondere als optischer Sensor ausgebildet ist.

15. Maschine nach einem der Ansprüche 1 bis 14, **dadurch gekennzeichnet, dass** die Elektromagnet-Bauelemente (28) jeweils auf gesonderten Trägerelementen gehaltert sind, welche in jeweils einer zugeordneten Öffnung in der Umfangswand (16) des Gehäuses (12) derart montierbar sind, dass die Polflächen der Spulen der Elektromagnet-Bauelemente (28) in der bestimmungsgemäßen Montagestellung in Ausrichtung zu den Polflächen der Permanentmagneten (27) zwischen den Läuferscheiben stehen.

16. Maschine nach einem der Ansprüche 4 bis 14, **dadurch gekennzeichnet, dass** die Elektromagnet-Bauelemente (28) insgesamt in einer ringförmigen Halterung vormontiert sind, die ihrerseits im Gehäuseinnern gehaltert ist.

17. Maschine nach einem der Ansprüche 1 bis 16, **dadurch gekennzeichnet, dass** die Elektromagnet-Bauelemente (28) jeweils zwei gesonderte Spulenwicklungen mit entgegengesetztem Windungssinn (umgepolte Differenzialwicklungen 30a bzw. 30b) aufweisen, und dass ein elektrische oder elektronische Steuereinrichtung (EC) für die wahlweise elektrische Ansteuerung jeweils einer der Spulenwicklungen (30a; 30b) vorgesehen ist.

18. Als Generator arbeitende Maschine nach einem der Ansprüche 1 bis 17, **dadurch gekennzeichnet, dass** die Enden der die Spulenwicklung (30) bildenden elektrischen Leiter jedes Elektromagnet-Bauelements (28) an die Eingangsanschlüsse einer gesonderten Gleichrichterschaltung angeschlossen sind, und dass die Gleichrichterschaltungen ausgangsseitig auf ein Paar von elektrischen Sammelleitungen geschaltet sind.

19. Maschine nach Anspruch 18, **dadurch gekennzeichnet, dass** dem Generator eine elektronische Wechselrichterschaltung zur Umformung des erzeugten Gleichstroms in einen netzkonformen Wechsel- bzw. Drehstrom nachgeschaltet ist.

## Claims

1. Electric machine (10; 10') with a rotor (26a, 26b; 26c; 36) which is rotatably mounted in a housing (12) with a rotor shaft (24) which extends beyond the housing, a plurality of electromagnet components (28) which are statically disposed in the housing at uniform angular spacings and spaced from the axis of rotation of the rotor, each with a coil core (32) bearing a coil winding (30) consisting of one or more conductors and with permanent magnets (27) which are disposed at uniform angular spacings and are non-rotatably retained in or on the rotor, these permanent magnets each having a pole face aligned opposite the end faces of the coil cores (32) and each having a polarity which is successively reversed in the peripheral direction, wherein the coil cores (32) of the electromagnet components (28) are disposed parallel to the axis of rotation of the rotor shaft (24) in the interior of the housing in such a way that their opposing end faces each lie in two planes which are spaced from one another and extend at right angles to the axis of rotation of the rotor shaft and the ends of the electric conductors which form the coil winding (30) of the individual electromagnet components (28) are interconnected via an electric or electronic control device to form at least two pairs of electrical connections and the rotor has at least two outer armature discs (26a, 26b; 26c) which extend radially to before the end faces of the coil cores and in which the permanent magnets are retained with their pole faces aligned with the respective associated end faces of the coil cores, the radially inner region of the said armature discs being provided with holes (46), **characterised in that**
in each case pairs of legs, which succeed one another in the peripheral direction and are each provided with a pole face of different polarity on the free end facing the coil, of the permanent magnets (27) provided in the two opposing outer armature discs (26a, 26b) are connected to one another in the end regions remote from the pole faces by a respective yoke (27a) which encloses the magnetic field and is made from soft or hard magnetic material,
that the armature discs (26a, 26b) are connected to one another by radially extending walls (38; 38') which form the cavity between the armature discs into a plurality of chambers (40) which are offset with respect to one another in the peripheral direction and are open towards the electromagnet components (28), and
that the radially inner holes (46) provided in the armature discs (26a, 26b) each open into the chambers (40) of the rotor.

2. Machine as claimed in Claim 1, **characterised in that** a row of electromagnet components (28) is provided in the interior of the housing of the machine, and that the rotor has two outer armature discs (26a, 26b) guided on opposing sides in front of the coil core end faces of the electromagnet components (28).

3. Machine as claimed in Claim I, **characterised in that** two or more rows of electromagnet components (28) spaced from one another in the longitudinal direction of the rotor shaft are disposed in the interior of the housing, and that in addition to the two outer armature discs (26a, 26b) which are guided in front of the outer end faces of the coil cores (32), pointing in opposite directions, of the outermost rows the rotor has an additional armature disc (26c) with permanent magnets (27) guided into each space between adjacent rows of electromagnet components (28) in front of the end surfaces thereof which face one another, and the pole faces of differing polarity of the permanent magnets (27) which are each exposed on opposing sides of the respective additional armature disc are aligned in the radial direction with the end faces of the coil cores (32) of the rows of electromagnet components.

4. Machine as claimed in one of Claims 1 to 3, **characterised in that** the interior of the housing is closed off and sealed against the external atmosphere.

5. Machine as claimed in Claim 4, **characterised in that** the outer and/or inner face of the housing (12) is provided with ribs in order enlarge the surface of the housing which gives off or takes up heat.

6. Machine as claimed in Claim 5, **characterised in that** radially extending ribs are provided on the inner faces of the housing end walls (14a; 14b) facing the rotor and between these ribs radial channels are formed for the return of the gaseous atmosphere circulated in the interior of the housing.

7. Machine as claimed in Claim 6, **characterised in that** the radial channels are closed off on the armature disc side by a metal plate so that between the radial walls (38; 38') channels are produced which are open only on the radially inner and radially outer end and are connected to the interior of the housing.

8. Machine as claimed in one of Claims 1 to 3, **characterised in that** air inlet openings are provided in regions of the housing (12) lying opposite the holes (46) in the armature discs (26a; 26b) and air outlet openings which are offset radially outward are provided in the housing (12).

9. Machine as claimed in one of Claims 1 to 8, **characterised in that** the electromagnet components (28) are disposed at uniform spacings in the peripheral direction and protrude from the inner face of the peripheral housing wall (16) into the space formed between the armature discs (26a, 26b).

10. Electric machine as claimed in one of Claims 1 to 9, **characterised in that** each pole face of the permanent magnets (27) has in the peripheral direction an extent which covers two pole faces of the coils (30, 32) of two electromagnet components (28) which succeed one another in the peripheral direction, and that the control means is desired so that in order to drive the rotor this control means switches over the polarity of every second one of the electromagnet components which succeed one another in the peripheral direction with each rotation of the rotor about an angular spacing which corresponds to the angular spacing between two electromagnet components (28) which succeed one another in the peripheral direction.

11. Electric machine as claimed in one of Claims I to 9, **characterised in that** three pole faces of the coils (30, 32) of three electromagnet components (28) which succeed one another in the peripheral direction can be associated with each pole face of the permanent magnets (27), in which case the control means is designed so that in order to drive the rotor, after the rotor has rotated by an angular spacing corresponding to the angular spacing between electromagnet components which succeed one another in the peripheral direction, the control means switches over the polarity of every third one of the electromagnet components (28) which succeed one another in the peripheral direction

12. Electric machine as claimed in one of Claims I to 9, **characterised in that** more than three pole faces of the coils of electromagnet components which succeed one another in the peripheral direction can be associated with each pole face of the permanent magnets, in which the case the control means is designed so that in order to drive the rotor, after the rotor has rotated by an angular spacing corresponding to the angular spacing between electromagnet components which succeed one another in the peripheral direction, the control means successively switches over the polarity of every one of the electromagnet components, which succeed one another in the peripheral direction, of the group of electromagnet components associated with a permanent magnet.

13. Machine as claimed in one of Claims 10 to 12, **characterised in that** a position pick-up which senses the relative rotational position of the rotor in the housing (12) is associated with the control device for initiating the switching over of the polarity of the electromagnet components (28)

14. Machine as claimed in Claim 13, **characterised in that** the position pick-up is constructed as a contactless sensor, particularly an optical sensor, which senses the relative rotational position of the rotor with respect to the housing.

15. Machine as claimed in one of Claims 1 to 14, **characterised in that** the electromagnet components (28) are each held on separate support elements which can each be installed in an associated opening the in the peripheral wall (16) of the housing (12) in such a way that the pole faces of the coils of the electromagnet components (28) are in the prescribed assembly position in alignment with the pole faces of the permanent magnets (27) between the armature discs.

16. Machine as claimed in one of Claims 4 to 14, **characterised in that** electromagnet components (28) as a whole are pre-installed in an annular mounting, which in turn is held in the interior of the housing.

17. Machine as claimed in one of Claims I to 16, **characterised in that** the electromagnet components (28) each have two separate coils with opposed directions of winding (reversed-polarity differential windings 30a, 30b respectively), and that an electric or electronic control device (EC) is provided for the selective electric control of each of the coil windings (30a; 30b).

18. Machine as claimed in one of Claims 1 to 17 which operates as a generator, **characterised in that** the ends of the electrical conductors of each electromagnet component (28) which form the coil winding (30) are connected to the input connections of a separate rectifying circuit, and that the rectifying circuits are connected on the output side to a pair of electric bus lines.

19. Machine as claimed in Claim 18, **characterised in that** an electronic inverter circuit is connected downstream of the generator in order to convert the generated direct current into an alternating or three-phase current which is synchronised with the power supply.

## Revendications

1. Machine électrique (10 ; 10') comportant un rotor (26a, 26b ; 26c ; 36) monté tournant dans une carcasse (12) et ayant un arbre (24) qui sort de la carcasse (12), un grand nombre d'éléments électro-aimants (28) montés fixes dans le carcasse à distance de l'axe de rotation du rotor et à des distances angulaires égales et comportant chacun un noyau de bobine (32) portant un enroulement de bobine (30) constitué d'un ou de plusieurs conducteurs, et des aimants permanents (27) placés à des distances angulaires égales, ayant chacun une face polaire faisant face aux faces frontales des noyaux de bobine (32), montés solidaires en rotation dans ou sur le rotor et ayant des polarités successives dans la direction circonférentielle opposées, les noyaux de bobine (32) des éléments électro-aimants (28) étant placés parallèlement à l'axe de rotation de l'arbre (24) du rotor à l'intérieur de la carcasse de façon telle que leurs faces frontales opposées soient dans deux plans espacés perpendiculaires à l'axe de rotation de l'arbre du rotor et les extrémités des conducteurs électriques formant l'enroulement de bobine (30) des éléments électro-aimants (28) étant interconnectées par un dispositif de commande électrique ou électronique à au moins deux bornes électriques, et le rotor présentant au moins deux disques de rotor extérieurs (26a, 26b; 26c) s'étendant radialement jusque devant les faces frontales des noyaux de bobine, dans lesquels les aimants permanents (27) sont montés avec leurs faces polaires dirigées vers les faces frontales associées des noyaux de bobine, et dans la zone intérieure radialement desquels sont prévues des ouvertures de passage (46),
**caractérisée par le fait**
**que** des paires de branches se suivant dans la direction circonférentielle, et pourvues à l'extrémité libre dirigée vers la bobine d'une face polaire de polarité différente, des aimants permanents (27) prévus dans les deux disques extérieurs opposés (26a, 26b) du rotor sont reliées dans les zones d'extrémité opposées aux faces polaires par une culasse (27a) renfermant en grande partie le champ magnétique et faite d'un matériau magnétique doux ou dur,
**que** les disques de rotor (26a, 26b) sont reliés par des parois s'étendant radialement (38 ; 38') formant l'espace vide entre les disques de rotor en un certain nombre de chambres (40) ouvertes vers les éléments électro-aimants (28) et décalées les unes des autres dans la direction circonférentielle, et
**que** les ouvertures de passage intérieures radialement (46) prévues dans les disques de rotor (26a, 26b) débouchent dans les chambres (40) du rotor.

2. Machine selon la revendication 1, **caractérisée par le fait qu'**à l'intérieur de la carcasse est prévue une série d'éléments électro-aimants (28), et que le rotor présente deux disques extérieurs (26a, 26b) qui passent sur des côtés opposés devant les faces frontales de noyau de bobine des éléments électro-aimants (28).

3. Machine selon la revendication 1, **caractérisée par le fait que** deux ou plus de deux rangées espacées dans la direction longitudinale de l'arbre du rotor d'éléments électro-aimants (28) sont prévues à l'intérieur de la carcasse, et que le rotor présente, en plus des deux disques de rotor extérieurs (26a, 26b) passant devant les faces frontales extérieures dirigées en sens opposé des noyaux de bobine (32) des rangées extérieures, un disque de rotor supplémentaire (26c) à aimants permanents (27) qui passe dans l'intervalle entre les rangées voisines d'électro-aimants (28) devant les faces frontales de ceux-ci en regard, les faces polaires de polarité différente des aimants permanents (27) dégagées sur des côtés opposés du disque de rotor supplémentaire étant orientées en direction radiale vers les faces frontales des noyaux (32) des rangées d'éléments électro-aimants.

4. Machine selon l'une des revendications 1 à 3, **caractérisée par le fait que** l'intérieur de la carcasse est fermé hermétiquement vis-à-vis de l'atmosphère extérieure.

5. Machine selon la revendication 4, **caractérisée par le fait que** le côté extérieur et/ou le côté intérieur de la carcasse (12) est nervuré pour agrandir sa surface qui cède ou absorbe de la chaleur.

6. Machine selon la revendication 5, **caractérisée par le fait que** sur la face intérieure dirigée vers le rotor des parois frontales (14a; 14b) de la carcasse sont prévues des nervures radiales entre lesquelles sont formés des canaux radiaux pour le retour de l'atmosphère gazeuse mise en circulation à l'intérieur de la carcasse.

7. Machine selon la revendication 6, **caractérisée par le fait que** les canaux radiaux sont fermés du côté des disques de rotor par une plaque métallique, de sorte qu'entre les parois radiales (38, 38') sont formés des canaux ouverts seulement à l'extrémité intérieure radialement et à l'extrémité extérieure radialement et communiquant avec l'intérieur de la carcasse.

8. Machine selon l'une des revendications 1 à 3, **caractérisée par le fait que** dans les zones de la carcasse (12) situées en face des ouvertures de passage (46) des disques de rotor (26a ; 26b) sont prévus dans la carcasse (12) des orifices d'entrée d'air et des orifices de sortie d'air, ces derniers étant décalés radialement vers l'extérieur.

9. Machine selon l'une des revendications 1 à 8, **caractérisée par le fait que** les éléments électro-aimants (28), répartis à intervalles égaux dans la direction circonférentielle, font saillie du côté intérieur de la paroi périphérique (16) de la carcasse dans l'intervalle formé entre les disques de rotor (26a ; 26b).

10. Machine électrique selon l'une des revendications 1 à 9, **caractérisée par le fait que** chaque face polaire des aimants permanents (27) a dans la direction circonférentielle une étendue qui couvre deux faces polaires des bobines (30, 32) de deux éléments électro-aimants (28) se suivant dans la direction circonférentielle, et que la commande est conçue de façon que pour l'entraînement du rotor, à chaque rotation de celui-ci d'un angle correspondant à la distance angulaire entre deux éléments électro-aimants se suivant dans la direction circonférentielle, elle change successivement la polarité d'un sur deux des éléments électro-aimants (28) se suivant dans la direction circonférentielle.

11. Machine électrique selon l'une des revendications 1 à 9, **caractérisée par le fait qu'**à chaque face polaire des aimants permanents (27) sont associées dans la direction circonférentielle trois faces polaires des bobines (30, 32) de trois éléments électro-aimants (28) se suivant dans la direction circonférentielle, et que la commande est conçue de façon que pour l'entraînement du rotor, après la rotation de celui-ci d'un angle correspondant à la distance angulaire entre les éléments électro-aimants se suivant dans la direction circonférentielle, elle change la polarité d'un sur trois des éléments électro-aimants (28) se suivant dans la direction circonférentielle.

12. Machine électrique selon l'une des revendications 1 à 9, **caractérisée par le fait qu'**à chaque face polaire des aimants permanents (27) sont associées dans la direction circonférentielle plus de trois faces polaires des bobines d'éléments électro-aimants (28) se suivant dans la direction circonférentielle, et que la commande est conçue de façon que pour l'entraînement du rotor, après une rotation de celui-ci d'un angle correspondant à la distance angulaire entre les éléments électro-aimants consécutifs, elle change successivement la polarité de chaque fois un des éléments électro-aimants (28) se suivant dans la direction circonférentielle du groupe d'éléments électro-aimants associé à un aimant permanent.

13. Machine selon l'une des revendications 10 à 12, **caractérisée par le fait qu'**au dispositif de commande pour le déclenchement du changement de polarité des éléments électro-aimants (28) est associé un transmetteur de position qui saisit la position angulaire relative du rotor dans la carcasse (12).

14. Machine selon la revendication 13, **caractérisée par le fait que** le transmetteur de position est un capteur, en particulier un capteur optique, qui saisit sans contact la position angulaire relative du rotor par rapport à la carcasse (12).

15. Machine selon l'une des revendications 1 à 14, **caractérisée par le fait que** les éléments électro-aimants (28) sont montés sur des éléments supports séparés qui peuvent être montés- chacun dans une ouverture associée faite dans la paroi périphérique (16) de la carcasse (12) de façon telle que les faces polaires des bobines des éléments électro-aimants (28), dans la position de montage prévue en alignement avec les faces polaires des aimants permanents (27), se trouvent entre les disques de rotor.

16. Machine selon l'une des revendications 4 à 14, **caractérisée par le fait que** les éléments électro-aimants (28) sont prémontés en totalité dans un support annulaire qui est lui-même monté à l'intérieur de la carcasse.

17. Machine selon l'une des revendications 1 à 16, **caractérisée par le fait que** les éléments électro-aimants (28) présentent chacun deux enroulements de bobine séparés à sens d'enroulement opposés (enroulements différentiels à pôles inverses 30a et 30b), et qu'un dispositif électrique ou électronique de commande (EC) est prévu pour la commande électrique au choix chaque fois d'un des enroulements de bobine (30a ; 30b).

18. Machine fonctionnant en génératrice selon l'une des revendications 1 à 17, **caractérisée par le fait que** les extrémités des conducteurs électriques de chaque élément électro-aimant (28) qui forment l'enroulement de bobine (30) sont connectées aux bornes d'entrée d'un montage redresseur séparé, et que les montages redresseurs sont connectés du côté sortie à une paire de lignes électriques collectrices.

19. Machine selon la revendication 18, **caractérisée par le fait qu'**après la génératrice est monté un montage onduleur électronique pour la transformation du courant continu produit en un courant alternatif ou triphasé conforme au réseau.
